# EUROPÄISCHE PATENTSCHRIFT

(11) **EP 3 031 530 B1**
(45) Veröffentlichungstag und Bekanntmachung des Hinweises auf die Patenterteilung: **20.10.2021**
(21) Anmeldenummer: 15192302.6
(22) Anmeldetag: 30.10.2015
(51) Int. Cl.: B05B 15/652, B05B 15/658, B05B 15/68, F16K 31/02

(54) **KANALREINIGUNGSSYSTEM MIT ZUMINDEST EINER DÜSE**
DUCT CLEANING SYSTEM WITH AT LEAST ONE NOZZLE
SYSTÈME DE NETTOYAGE DE CONDUITS AVEC AU MOINS UNE BUSE

(30) Priorität: 11.12.2014 DE 202014105997 U
(43) Veröffentlichungstag der Anmeldung: 15.06.2016
(73) Patentinhaber: iPEK International GmbH, 87477 Sulzberg (DE)
(72) Erfinder: Zahnd, Fabian, 87437 Kempten (DE); Henn, Peter, 87452 Krugzell (DE)
(74) Vertreter: 2s-ip Schramm Schneider Bertagnoll Patent- und Rechtsanwälte Part mbB

(56) Entgegenhaltungen:
- EP-A1- 1 450 095
- EP-A1- 1 498 647
- WO-A1-2009/144510
- WO-A2-2011/104021
- DE-A1-102004 062 241
- JP-A- H1 068 979
- US-A- 2 849 530
- US-A- 4 675 728
- US-A1- 2006 071 088
- US-A1- 2012 080 541
- US-A1- 2014 076 993

## Beschreibung

### Gebiet der Erfindung

Die Erfindung betrifft ein Kanalreinigungssystem mit zumindest einem Spülkopf, wobei der Spülkopf zumindest eine Düse und zumindest eine Einrichtung zum Steuern der Düse aufweist.

Solche Kanalreinigungssysteme sind z.B. aus EP 1450095 A1 und WO 2011/104021 A2 bekannt.

### Hintergrund der Erfindung und Stand der Technik

Zur Durchführung von Kanalreinigungs- bzw. Sanierungsarbeiten ist es bekannt, Kanalinspektions- und/oder Wartungssysteme bzw. Kanalreinigungssysteme zu verwenden, die in das Kanalrohr eingebracht werden können und im Kanalrohr bewegt, etwa verfahren oder vorgeschoben, werden können.

Zur Wartung von Kanälen ist es bekannt, die hierzu verwendeten Systeme mit einem Spülkopf oder mehreren Spülköpfen auszustatten, wobei die Spülköpfe jeweils eine oder mehrere Düsen (auch Spüldüsen genannt) aufweisen können. Die Düsen weisen ein Düsengehäuse auf, in dem ein Wasserkanal ausgebildet ist, durch den das dem Spülkopf zugeführte Spülwasser hindurchströmen und mit einem gewissen Druck aus dem Wasserkanal austreten kann.

Zum Steuern der Düse, etwa eines Austrittswinkels des aus der Düse austretenden Spülwassers oder eines Betriebszustandes (auf/zu/teilweise offen) muss beispielsweise der gesamte Spülkopf bewegt werden, um den Winkel des austretenden Wasserstrahls relativ zur Rohrinnenwandung zu verändern bzw. müssen komplexe mechanische Absperrvorrichtungen in den Spülkopf integriert werden, um den Wasseraustritt aus einzelnen Düsen zu blockieren, sofern der Spülkopf mehrere Düsen aufweist. Alternativ kann der Wasseraustritt aus den Düsen unterbrochen werden, in dem die komplette Wasserzufuhr zu dem Spülkopf unterbrochen wird. Davon sind allerdings sämtliche Düsen des Spülkopfes betroffen. Um den Austrittswinkel des aus der Düse austretenden Wassers zu ändern, ist es bekannt, die Lage der Düse relativ zum Spülkopf zu verändern. Auch hierbei müssen komplexe mechanische Vorrichtungen bzw. entsprechend ausgestaltete elektromechanische Vorrichtungen in den Spülkopf integriert werden.

Diese Lösungen haben allerdings den Nachteil, dass einerseits die Einsatzmöglichkeiten eines Spülkopfes reduziert werden und dass andererseits der Spülkopf entsprechend groß dimensioniert werden muss, um die mechanischen bzw. elektromechanischen Verstellmittel für die Düsen in den Spülkopf integrieren zu können. Für Kanäle bzw. Wasserleitungen mit kleinem Durchmesser können nur entsprechend klein dimensionierte Spülköpfe verwendet werden, wobei aufgrund der fehlenden Flexibilität kleiner Spülköpfe für verschiedene Einsatzszenarien auch verschiedene Spülköpfe verwendet werden müssen.

### Aufgabe der Erfindung

Der Erfindung liegt daher die Aufgabe zugrunde, die vorstehend genannten Nachteile zumindest teilweise zu vermeiden und Lösungen zum Steuern zumindest einer Düse, insbesondere eines Spülkopfes, bereitzustellen, die bei einer besonders kompakten Ausgestaltung des Spülkopfes dennoch einen flexibleren Einsatz der Düsen bzw. des Spülkopfes ermöglichen.

### Erfindungsgemäße Lösung

Erfindungsgemäß wird diese Aufgabe mit einem Kanalreinigungssystem nach Anspruch 1 gelöst. Vorteilhafte Weiterbildungen und Ausgestaltungen der Erfindung sind in den abhängigen Ansprüchen angegeben.

Bereitgestellt wird demnach ein Kanalreinigungssystem, aufweisend zumindest einen Spülkopf, wobei der Spülkopf zumindest eine Düse und zumindest eine Einrichtung zum Steuern der zumindest einen Düse aufweist, wobei
- die Düse ein Düsengehäuse aufweist, in dem ein Fluidkanal ausgebildet ist, durch den ein der Düse unter Druck zugeführtes Fluid, insbesondere Wasser hindurchströmt,
- der Düse zumindest ein Formgedächtniselement zugeordnet ist, mit dem ein Betriebszustand (auf/zu/teilweise geöffnet), ein Querschnitt der Fluidaustrittsöffnung der Düse und/oder ein Austrittswinkel des aus der Düse austretenden Fluides einstellbar ist.

Der Düse kann ein Steuermittel zugeordnet sein, mit dem der Betriebszustand, der Querschnitt und/oder der Austrittswinkel einstellbar ist, und das Steuermittel kann mit einem Stellmittel gekoppelt sein, um das Steuermittel relativ zum Düsengehäuse bzw. relativ zum Fluidkanal zu bewegen, wobei das Stellmittel zumindest teilweise durch das zumindest eine Formgedächtniselement gebildet wird, welches in Abhängigkeit von zumindest einer Einflussgröße seine Form ändert, wobei die Formänderung des Formgedächtniselements das Bewegen des Steuermittels relativ zum Düsengehäuse bewirkt.

Das Steuermittel kann hierbei durch das Stellmittel selbst bereitgestellt werden, d.h., das Stellmittel bildet gleichzeitig das Steuermittel.

Das Formgedächtniselement kann ein längliches Formgedächtniselement sein, das in Abhängigkeit von der Einflussgröße seine Länge ändert und aufgrund der Längenänderung das Steuermittel mit einer Stellkraft beaufschlagt.

Das Stellmittel kann zusätzlich zumindest ein Zugelement aufweisen, welches einerseits mit dem Formgedächtniselement und andererseits mit dem Steuermittel verbunden ist.

Die Einflussgröße kann die Temperatur des Formgedächtniselements sein, wobei die für ein vorbestimmtes Bewegen des Steuermittels relativ zum Düsengehäuse benötigte Temperatur dem Formgedächtniselement direkt oder indirekt beaufschlagbar ist.

Vorteilhaft ist es, wenn das Formgedächtniselement mit einer Steuer- und/oder Regeleinrichtung gekoppelt ist, die angepasst ist, das Formgedächtniselement mit der für ein vorbestimmtes Bewegen des Steuermittels relativ zum Düsengehäuse benötigten Temperatur zu beaufschlagen.

Die Steuer- und/oder Regeleinrichtung kann angepasst sein, elektrischen Strom in das Formgedächtniselement einzuspeisen oder durch das Formgedächtniselement zu leiten, um es dadurch zu erwärmen.

Die Einrichtung kann mindestens ein mit dem Steuermittel zusammenwirkendes Rückstellmittel aufweisen, wobei eine Rückstellkraft des Rückstellmittels entgegen der Stellkraft des Stellmittels wirkt.

Das Rückstellmittel kann zumindest ein Federelement umfassen.

In einer Ausgestaltung der Erfindung kann das Steuermittel einen zylinderförmigen Bolzen umfassen, der quer zum Fluidkanal und um seine Längsachse drehbar angeordnet ist und einen Durchmesser aufweist, der größer ist als der Durchmesser des Fluidkanals, wobei der Bolzen einen quer durch den Bolzen verlaufenden Kanal aufweist.

Der Bolzen kann mit dem Stellmittel von einer ersten Position, in der der Kanal des Bolzens den Fluidkanal der Düse für ein Durchströmen des Fluides durch den Fluidkanal zumindest teilweise freigibt, in eine zweite Position, in der der Bolzen den Fluidkanal der Düse für ein Durchströmen des Fluides durch den Fluidkanal sperrt, drehbar sein.

Der Bolzen kann so relativ zum Fluidkanal der Düse angeordnet sein, dass der Kanal des Bolzens einen Wasseraustrittskanal der Düse bildet, wobei ein Drehen des Bolzens eine Änderung des Austrittswinkels des aus der Düse austretenden Fluides bewirkt.

Der Kanal des Bolzens kann fluideintrittsseitig einen größeren Durchmesser aufweist als fluidaustrittsseitig, vorzugsweise einen größeren Durchmesser, als das dem Bolzen zugewandte Ende des Fluidkanals der Düse.

In einer Ausgestaltung der Erfindung kann das Steuermittel einen Riegel umfassen, der quer zum Fluidkanal der Düse angeordnet ist und mit dem Stellmittel in radialer Richtung relativ zum Fluidkanal bewegbar ist, wobei der Riegel von einer ersten Position, in der der Riegel den Fluidkanal der Düse für ein Durchströmen des Fluides durch den Fluidkanal sperrt, in eine zweite Position, in der der Riegel den Fluidkanal der Düse für ein Durchströmen des Fluides durch den Fluidkanal zumindest teilweise freigibt, bewegbar ist.

In einer Ausgestaltung der Erfindung kann das Steuermittel eine Lochblende mit einem ersten Loch umfassen, die fluidkanalausgangsseitig drehbar an der Düse angeordnet ist, wobei in einer ersten Drehposition der Lochblende relativ zur Düse das erste Loch mit einer Fluidaustrittsöffnung des Fluidkanals der Düse korrespondiert und den Fluidaustritt aus dem Fluidkanal durch das erste Loch freigibt.

Die Lochblende kann ein zweites Loch aufweisen, wobei das erste Loch einen Durchmesser aufweist, der verschieden von dem Durchmesser des zweiten Lochs ist, und wobei die Lochblende mit dem Stellmittel von der ersten Drehposition in eine zweite Drehposition relativ zur Düse drehbar ist, bei der das zweite Loch mit der Fluidaustrittsöffnung des Fluidkanals der Düse korrespondiert und den Fluidaustritt aus dem Fluidkanal durch das zweite Loch freigibt.

Die Lochblende kann mit dem Stellmittel von der ersten Drehposition und/oder von der zweiten Drehposition in eine dritte Drehposition relativ zur Düse drehbar sein, bei der die Lochblende einen Fluidaustritt aus dem Fluidkanal verhindert.

Die Lochblende kann eine Anzahl erster Löcher und eine Anzahl zweiter Löcher aufweisen.

Das Zugelement kann in radialer Richtung zumindest teilweise um die Lochblende geführt sein. Das Zugelement kann an der Lochblende befestigt sein.

Ein Abschnitt des Rückstellmittels kann in radialer Richtung zumindest teilweise um die Lochblende geführt sein und an der Lochblende befestigt sein. Das um die Lochblende geführte Zugelement kann alternativ mit dem Rückstellmittel gekoppelt sein.

In einer Ausgestaltung der Erfindung kann das Steuermittel eine Blende, insbesondere eine Irisblende, mit mehreren relativ zueinander und quer zum Fluidkanal bewegbaren Lamellen umfassen, die fluidkanalausgangsseitig an der Düse angeordnet ist, wobei zumindest eine der Lamellen mit dem Stellmittel gekoppelt ist und mit dem Stellmittel bewegbar ist, wobei ein Bewegen der Lamellen ein Vergrößern oder ein Verkleinern des Querschnittes der Fluidaustrittsöffnung der Düse bewirkt. In dem Düsengehäuse mehrere Fluidkanäle ausgebildet sind.

In einer Ausgestaltung der Erfindung kann das Steuermittel einen Schieber umfassen, der mit dem Stellmittel in radialer Richtung quer zur Längsachse der Düse zwischen einer ersten Schieberposition und einer zweiten Schieberposition hin und her bewegbar ist, wobei in dem Düsengehäuse zumindest ein erster Fluidkanal und ein zweiter Fluidkanal ausgebildet sind, wobei bei der ersten Schieberposition der Schieber den Fluidaustritt aus dem ersten Fluidkanal verhindert und wobei bei der zweiten Schieberposition der Schieber den Fluidaustritt aus dem zweiten Fluidkanal verhindert.

Der Schieber kann mit dem Stellmittel in eine dritte Schieberposition, die zwischen der ersten Schieberposition und der zweiten Schieberposition liegt, bewegbar ist und wobei bei der dritten Schieberposition der Schieber den Fluidaustritt aus beiden Fluidkanälen verhindert oder den Fluidaustritt aus beiden Fluidkanälen freigibt.

Der erste Fluidkanal kann in einem vorbestimmten und von Null verschiedenen Winkel zum zweiten Fluidkanal verlaufen, sodass der Austrittswinkel des aus dem ersten Fluidkanal austretenden Fluides verschieden von dem aus dem zweiten Fluidkanal austretenden Fluides ist.

In einer Ausgestaltung der Erfindung kann das Düsengehäuse einen Düsenring umfassen, in dem zumindest ein Fluidkanal ausgebildet ist, wobei der Düsenring drehbar auf dem Spülkopf gelagert ist und wobei das Steuermittel zumindest eine Bremsbacke umfasst, die mit dem Stellmittel bewegbar ist und gegen einen Innen- oder Außenwandungsabschnitt des Düsenringes drückbar ist, um die eine Drehung des Düsenring zu blockieren.

In einer Ausgestaltung der Erfindung kann das Düsengehäuse einen Düsenring umfassen, in dem zumindest ein Fluidkanal ausgebildet ist, wobei der Düsenring drehbar auf dem Spülkopf gelagert ist und wobei das Steuermittel einen Riegel umfasst, der mit dem Stellmittel relativ zur Düse in radialer Richtung nach außen und nach innen bewegbar ist, wobei der Düsenring eine Aussparung aufweist, in die der Riegel in Eingriff bringbar ist, um ein Drehen des Düsenringes zu blockieren.

In einer Ausgestaltung der Erfindung kann das Steuermittel einen Spülschlauch umfasst, in dem ein Wasserkanal ausgebildet ist und an dessen vorderen Ende zumindest eine Düse oder ein Spülkopf angeordnet ist.

Der Spülschlauch, insbesondere die Wandung des Spülschlauches, kann zumindest abschnittsweise ein Formgedächtniselement aufweisen.

In dem Spülschlauch kann das Stellmittel angeordnet sein und parallel zur Längsachse und außerhalb der Längsachse des Spülschlauches verlaufen, sodass ein Verkürzen des Formgedächtniselements des Stellmittels ein Biegen des Spülschlauches bewirkt.

In dem Spülschlauch können zumindest drei Stellmittel angeordnet sein, die in Umfangsrichtung gleichmäßig verteilt angeordnet sind, sodass der Spülschlauch in jede beliebige Richtung gebogen werden kann.

Das Steuermittel kann einen Ring umfassen, der koaxial zum Fluidkanal in dem Fluidkanal angeordnet ist, wobei der Ring das Formgedächtniselement bildet. Der Ring kann bei Beaufschlagung mit der Einflussgröße seine Form derart ändern, dass sich der Durchmesser des Ringloches verkleinert.

### Kurzbeschreibung der Figuren

Weitere Einzelheiten und Merkmale der Erfindung sowie konkrete, insbesondere vorteilhafte Ausführungsformen der zum erfindungsgemäßen Kanalreinigungssystem gehörenden Einrichtung zum Steuern der Düse ergeben sich aus der nachfolgenden Beschreibung in Verbindung mit der Zeichnung. Es zeigt:
- Fig. 1: ein erstes Ausführungsbeispiel einer erfindungsgemäßen Einrichtung zum Steuern eines Betriebszustandes einer Düse;
- Fig. 2: ein Ausführungsbeispiel einer erfindungsgemäßen Einrichtung zum Steuern eines Betriebszustandes und/oder eines Wasseraustrittswinkels der Düse;
- Fig. 3: ein Ausführungsbeispiel einer erfindungsgemäßen Einrichtung zum Steuern eines Betriebszustandes einer Düse;
- Fig. 4: ein weiteres Beispiel einer erfindungsgemäßen Einrichtung zum Steuern eines Betriebszustandes und/oder eines Querschnittes der Austrittsöffnung einer Düse;
- Fig. 5: ein Beispiel einer erfindungsgemäßen Einrichtung zum Steuern eines Querschnittes einer Wasseraustrittsöffnung einer Düse;
- Fig. 6: ein Beispiel einer erfindungsgemäßen Einrichtung zum Steuern des Betriebszustandes und/oder des Wasseraustrittswinkels einer Düse;
- Fig. 7: ein Beispiel einer erfindungsgemäßen Einrichtung zum Steuern einer Drehung eines Düsenrings;
- Fig. 8: ein weiteres Beispiel einer erfindungsgemäßen Einrichtung zum Steuern einer Drehung eines Düsenringes;
- Fig. 9: ein Beispiel eines erfindungsgemäßen Spülkopfes, welches eine Einrichtung zum Steuern einer Düse umfasst, in dem zusätzlich eine Bildaufnahmeeinrichtung angeordnet ist;
- Fig. 10: ein Beispiel einer erfindungsgemäßen Einrichtung zum Steuern einer Düse, wobei der Spülkopf an einem Spülschlauch angeordnet ist;
- Fig. 11: eine vorteilhafte Weiterbildung des in Fig. 10 gezeigten Spülschlauches; und
- Fig. 12: ein noch weiteres Beispiel einer erfindungsgemäßen Einrichtung zum Steuern einer Düse.

### Detaillierte Beschreibung der Erfindung

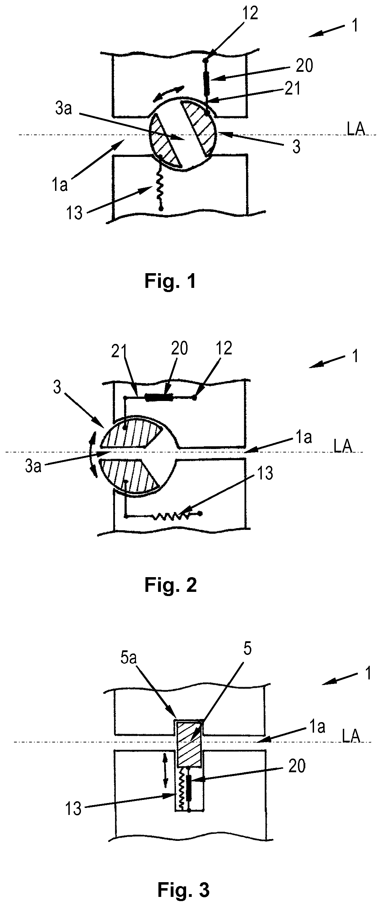

**Fig. 1** zeigt ein Beispiel einer erfindungsgemäßen Einrichtung zum Steuern einer Düse 1, insbesondere eines Spülkopfes eines Inspektions- und/oder Reinigungssystems. Die Düse weist ein Düsengehäuse auf, in dem ein Fluidkanal bzw. Wasserkanal 1a ausgebildet ist, durch den ein Fluid, vorzugsweise Wasser, hindurchströmt, welches vorzugsweise unter Druck dem Spülkopf zugeführt wird, beispielsweise über einen Spülschlauch. In dem Fluidkanal bzw. Wasserkanal 1a ist ein Bolzen 3 angeordnet, der im Wesentlichen zylinderförmig ausgestaltet ist. Der Bolzen ist so relativ zu dem Wasserkanal 1a angeordnet, dass der zylinderförmige Bolzen im Wesentlichen quer zum Wasserkanal 1a liegt. Der Durchmesser des Bolzens ist hierbei größer als der Durchmesser des Wasserkanals 1a, der vorzugsweise einen zylinderförmigen Querschnitt aufweist.

In dem Bolzen 3 ist ein dem Bolzen durchdringender Kanal 3a ausgebildet, wobei der Kanal 3a quer durch den Bolzen verläuft. Der Kanal 3a kann einen runden Querschnitt aufweisen. Allerdings kann der Kanal 3a auch andere Querschnittsformen aufweisen. In dem hier gezeigten Beispiel ist der Durchmesser des Kanals 3a im Wesentlichen gleich groß wie der Durchmesser des Wasserkanals 1a. Er kann aber auch größer oder kleiner sein als der Durchmesser des Wasserkanals 1a.

Der Bolzen 3 ist um seine Längsachse drehbar in dem Wasserkanal 1a bzw. in dem Düsengehäuse gelagert. Dadurch kann durch Drehen des Bolzens 3 ein Wasseraustritt aus der Düse gesperrt oder freigegeben werden. Durch Drehen des Bolzens derart, dass der Kanal 3a des Bolzens im Wesentlichen senkrecht zur Längsachse LA des Wasserkanals 1a der Düse 1 steht, wird ein Durchströmen des Wassers durch den Wasserkanal 1a blockiert.

Dem Bolzen 3 ist ein Stellmittel zugeordnet, mit dem der Bolzen in eine Richtung gedreht werden kann. Ferner ist dem Bolzen 3 ein Rückstellmittel 13 zugeordnet, mit dem der Bolzen in die entgegengesetzte Richtung gedreht werden kann. Das Rückstellmittel 13 ist hier als Federelement ausgestaltet und stellt eine Rückstellkraft bereit, die entgegen der Stellkraft des Stellmittels wirkt.

Erfindungsgemäß weist das Stellmittel ein Formgedächtniselement 20 auf, das hier als längliches Formgedächtniselement bzw. als länglicher Formgedächtnisdraht ausgebildet ist. Ferner weist das Stellmittel zusätzlich Zugelemente 21 auf, die jeweils mit dem Formgedächtniselement 20 und mit einer Befestigungseinheit 12 bzw. mit dem Bolzen 3 verbunden sind. Als Zugelemente 21 können beispielsweise Drähte, Seile oder dergleichen verwendet werden. Vorteilhaft ist es allerdings, wenn die Zugelemente 21 bei Einwirkung einer Zugkraft ihre Länge dauerhaft nicht verändern.

Bei der in Fig. 1 gezeigten Ausgestaltung des Stellmittels sowie auf die in den nachfolgenden Figuren gezeigten Stellmittel kann auf die Zugelemente 21 auch verzichtet werden und der Formgedächtnisdraht 20 kann direkt an dem Bolzen bzw. an den jeweiligen Steuermittel und an der Befestigungseinheit 12 befestigt sein.

Zum Drehen des Bolzen 3 wird das Stellmittel verkürzt, indem das Formgedächtniselement 20 mit einer physikalischen Größe beaufschlagt wird, die eine Formänderung des Formgedächtniselements 20 bewirkt. Die Formänderung des Formgedächtniselements 20 ist vorzugsweise dergestalt, dass sich die Länge des Formgedächtniselementes reduziert und das Stellmittel dadurch eine Zugkraft auf dem Bolzen ausübt, die ein Drehen des Bolzens bewirkt. Wird das Formgedächtniselement 20 nicht mehr mit der physikalischen Größe beaufschlagt, kehrt das Formgedächtniselement 20 aufgrund der Rückstellkraft des Rückstellmittels 30 wieder in seine ursprüngliche Form bzw. Länge zurück, d.h. das Stellmittel verlängert sich wieder, sodass der Bolzen 3 nunmehr in die entgegengesetzte Richtung gedreht wird.

Bei der in Fig. 1 gezeigten Ausgestaltung der erfindungsgemäßen Einrichtung zum Steuern der Düse und bei den nachfolgend beschriebenen Ausgestaltungen einer erfindungsgemäßen Einrichtung zum Steuern einer Düse werden für das Formgedächtniselement solche Materialien verwendet, die bei einer Temperaturveränderung, beispielsweise bei einer Temperaturerhöhung ihre Form bzw. Länge verändern. Vorzugsweise ist das Formgedächtniselement so ausgestaltet, dass sich die Länge bei einer Temperaturerhöhung verringert. Es können aber auch Formgedächtniselemente verwendet werden, bei denen eine Temperaturerhöhung eine Vergrößerung der Länge des Formgedächtniselementes bewirkt.

Die Verwendung von Formgedächtniselementen als Stellmittel oder Bestandteil des Stellmittels hat den Vorteil, dass dadurch sehr hohe Stellkräfte bei sehr geringem Materialeinsatz und insbesondere bei sehr geringem Platzbedarf erreicht werden können. Damit kann eine besonders platzsparende Einrichtung zum Steuern einer Düse bereitgestellt werden. Zudem können sämtlichen Düsen eines Spülkopfes jeweils eine eigene Einrichtung zum Steuern zugeordnet werden, ohne den Spülkopf selbst wesentlich vergrößern zu müssen. Dadurch sind besonders platzsparende und kompakte Spülköpfe realisierbar, die dennoch einen möglichst großen Grad an Flexibilität hinsichtlich ihrer Einsatzmöglichkeiten bieten.

Zudem unterliegen die Formgedächtniselemente keinem oder einem nur sehr geringem Verschleiß, wodurch die Wartungsintervalle für die Wartung von Spülköpfen erheblich verlängert werden können.

Als besonders vorteilhaft hat sich herausgestellt, wenn für das Formgedächtniselement 20 Formgedächtnislegierungen oder Formgedächtnispolymere verwendet werden, die den sogenannten Zwei-Weg-Effekt aufweisen. D.h. beim Abkühlen wieder ihre ursprüngliche Form bzw. ursprüngliche Länge einnehmen. Vorteilhafte Formgedächtnislegierungen sind beispielsweise Nickel-Titan, Nickel-Titan-Kupfer, Kupfer-Zink, Kupfer-Zink-Aluminium, Kupfer-Aluminium-Nickel, Eisen-Nickel-Aluminium, Eisen-Mangan oder Zink-Gold-Kupfer.

Die zur Formänderung bzw. zum Verkürzen des Formgedächtniselements 20 erforderliche Erwärmung kann beispielsweise über Widerstandselemente, über induktive Erwärmung oder dergleichen bewirkt werden. Beispielsweise kann die Beheizung des Formgedächtniselements 20 auf direktem Weg erfolgen, indem ein über das Formgedächtniselement 20 geführter Strom zu dessen Aufheizung aufgrund des ohmschen Widerstandes führt.

In einer einfachen Form wird das Formgedächtniselement mit einem elektrischen Strom beaufschlagt, der eine entsprechende Erwärmung des Formgedächtniselements bewirkt. Hierzu kann das Formgedächtniselement 20 mit einer Steuer- und/oder Regeleinrichtung gekoppelt sein, die auf einer Platine angeordnet ist. Die Platine kann an der Befestigungseinheit 12 angeordnet sein und weist Anschlüsse für Steuer- und/oder Datenkabel auf. Über die Steuer-/Datenkabel kann die Steuer- und/oder Regeleinrichtung mit einer Kontrolleinrichtung verbunden sein, um die jeweilige Einrichtung zum Steuern der Düse zu steuern.

Die Steuer- und/oder Regeleinrichtung kann alternativ auch über eine drahtlose Kommunikationsverbindung mit der Kontrolleinrichtung gekoppelt sein. Die drahtlose Kommunikationsverbindung hat den Vorteil, dass dem Spülkopf keine Steuer- und/oder Datenkabel zugeführt werden müssen, weil solche Kabel parallel zu dem Spülschlauch in das zu reinigende Rohr eingeführt werden müssen und einem besonders hohen Verschleiß unterliegen bzw. aufgrund der mechanischen Beanspruchung leicht reißen können. Es ist daher vorteilhaft, an dem Spülkopf ein Sende-/Empfangsmodul für die drahtlose Kommunikationsverbindung anzuordnen, das vorzugsweise ausgestaltet ist, eine WLAN-Kommunikationsverbindung aufzubauen.

Für die Energieversorgung der Einrichtung zum Steuern der Düsen bzw. für das Sende-/Empfangsmodul kann entweder durch eine in die Spüldüse integrierte Stromversorgung, etwa Akkumulator, bereitgestellt werden. Alternativ kann die Energie von einer im Spülkopf angeordneten Wasserturbine bereitgestellt werden, die von dem dem Spülkopf zugeführten Spülwasser angetrieben wird.

Das vorstehend zur Ausgestaltung des Stellmittels und insbesondere des Formgedächtniselements Gesagte gilt in entsprechender Weise auch für die Stellmittel bzw.

Formgedächtniselemente, die in den Beispielen gemäß Fig. 2 bis Fig. 12 verwendet werden.

Fig. 2 zeigt ein weiteres Ausführungsbeispiel einer erfindungsgemäßen Einrichtung zum Steuern einer Düse. Das Steuermittel wird hier von einem Bolzen 3 gebildet, der mit Hilfe eines Stellmittels, das ein Formgedächtniselement 20 aufweist, in eine Richtung gedreht wird. Mit einem Rückstellmittel 13, dessen Rückstellkraft entgegen der Stellkraft des Stellmittels wirkt, wird der Bolzen in die entgegengesetzte Richtung gedreht.

In dem Bolzen 3 ist ein Kanal 3a ausgebildet, der hier zugleich den Wasseraustrittskanal der Düse bildet. Der Bolzen ist zylinderförmig ausgestaltet, wobei der Kanal 3a den Bolzen 3 in Querrichtung durchdringt. Die Lage des Bolzens 3 relativ zum Wasserkanal 1a entspricht der Lage des in Fig. 1 gezeigten Bolzens. In Längsrichtung zum Wasserkanal 1a ist der Bolzen allerdings so in dem Düsengehäuse angeordnet, dass die Wasseraustrittsseite des Kanals 3a etwas außerhalb des Düsengehäuses liegt, sodass bei einer Drehung des Bolzens 3 der Austrittswinkel des aus dem Kanal 3a austretenden Spülwassers verändert wird.

Wassereintrittsseitig weist der Kanal 3a einen größeren Durchmesser auf als wasseraustrittsseitig. Insbesondere weist der Kanal 3a wassereintrittsseitig einen größeren Durchmesser auf als das wassereintrittsseitige Ende des Wasserkanals 1a der Düse 1. Dadurch wird gewährleistet, dass bei einem Drehen des Bolzens 3 dieser den Wasserkanal 1a nicht abdeckt und so einen Wasseraustritt durch den Kanal 3a verhindert.

Fig. 3 zeigt eine weitere Ausgestaltung einer erfindungsgemäßen Einrichtung zum Steuern einer Düse. Als Steuermittel ist hier ein Riegel 5 vorgesehen, der in Querrichtung zum Wasserkanal 1a der Düse 1 relativ zum Wasserkanal 1a verschiebbar ist. In Abhängigkeit der Verschiebeposition des Riegels 5 gibt dieser den Wasserdurchfluss durch den Wasserkanal 1a frei oder sperrt den Wasserdurchfluss durch den Wasserkanal 1a. In Fig. 3 ist der Riegel 5 in einer Verschiebeposition gezeigt, bei der der Wasserdurchfluss durch den Wasserkanal 1a gesperrt ist und damit kein Wasser aus der Düse austreten kann.

In einer Entriegelungsposition, d.h. in einer Verschiebeposition, bei der der Riegel 5 den Wasseraustritt freigibt, befindet sich der Riegel in einer Aussparung, die ebenfalls quer zur Längsachse LA des Wasserkanals 1a verläuft.

Zum Bewegen des Riegels 5 ist dieser mit einem Stellmittel, das ein Formgedächtniselement 20 aufweist, gekoppelt. Für eine Rückwärtsbewegung des Riegels 5 ist dieser mit einem Rückstellmittel, insbesondere mit einer Rückstellfeder 13 gekoppelt. Das Formgedächtniselement 20 ist hier so ausgestaltet, dass eine Temperaturbeaufschlagung zu einer Verkürzung des Formgedächtniselements 20 bzw. des Stellmittels führt und der Riegel 5 daher in die Entriegelungsposition gebracht wird. Die Rückstellfeder 13 ist dann als Druckfeder ausgestaltet, die den Riegel 5 wieder in die Verriegelungsposition bringt, wenn das Formgedächtniselement 20 nicht mehr mit einer Temperatur beaufschlagt wird.

Alternativ zur vorstehenden Ausgestaltung des Verschiebemechanismus kann das Formgedächtniselement 20 auch so ausgestaltet sein, dass eine Temperaturbeaufschlagung des Formgedächtniselementes zu einer Verlängerung des Formgedächtniselementes 20 führt und dadurch der Riegel 5 in die Verriegelungsposition bewegt wird. Die Rückstellfeder 13 ist dann so ausgestaltet, dass sie den Riegel 5 wieder in die Entriegelungsposition bringt, wenn das Formgedächtniselement 20 nicht mehr mit einer Temperatur beaufschlagt wird.

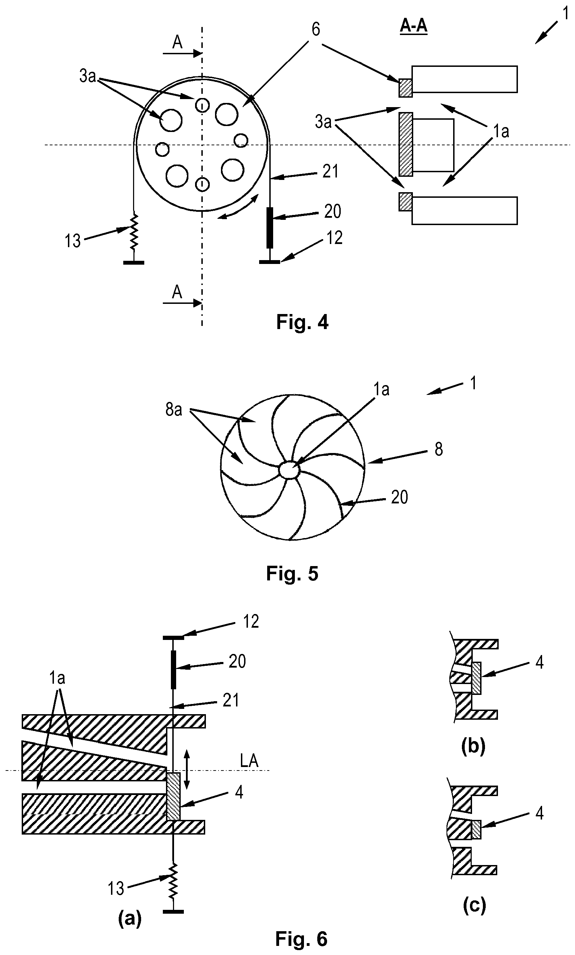

Fig. 4 zeigt eine weitere Ausgestaltung einer erfindungsgemäßen Einrichtung zum Steuern einer Düse. Als Steuermittel ist hier eine Lochblende 6 vorgesehen, die wasserkanalausgangsseitig drehbar an der Düse 1 angeordnet ist. Die Lochblende 6 weist eine Anzahl von Löchern 3a auf, die die Lochblende vollständig durchdringen und dessen Mittelpunkt bei geeigneter Drehposition mit der Längsachse des Wasserkanals 1a der Düse 1 korrespondiert. In dieser Drehposition gibt das Loch 3a den Wasseraustritt aus dem Wasserkanal 1a frei. Eine solche Drehposition ist in Fig. 4 gezeigt.

Die Löcher 3a der Lochblende 6 können jeweils einen unterschiedlichen Durchmesser aufweisen, sodass durch Drehen der Lochscheibe 6 der Querschnitt der Wasseraustrittsöffnung der Düse verändert werden kann. In Fig. 4 ist eine Drehposition der Lochblende 6 gezeigt, bei der ein Wasseraustritt durch jene Löcher 3a erfolgt, die einen kleineren Durchmesser aufweisen.

Die Düse kann mehrere Wasserkanäle 1a aufweisen, wobei die kleineren Löcher und die größeren Löcher vorzugsweise jeweils so in der Lochblende angeordnet sind, dass bei einer bestimmten Drehposition der Lochblende einerseits sämtliche Wasserkanäle 1a geöffnet sind und andererseits sämtliche Wasseraustrittsöffnungen denselben Querschnitt aufweisen. Vorteilhaft ist es zudem, wenn die Lochscheibe 6 in eine solche Position drehbar ist, bei der sämtliche Wasseraustrittsöffnungen verschlossen sind. Dies kann beispielsweise dadurch geschehen, dass die Drehscheibe so verdreht wird, dass sich die Wasserkanäle 1a bzw. die Wasseraustrittsöffhungen der Wasserkanäle 1a jeweils zwischen zwei Löchern 3a der Lochscheibe 6 befinden.

Das Stellmittel wird hier von einem Formgedächtniselement 20 gebildet, das an einer Befestigungseinheit 12 befestigt ist. An dem von der Befestigungseinheit 12 abgewandten Ende ist an dem Formgedächtniselement 20 ein Zugelement 21 befestigt, das in radialer Richtung um die Lochblende 6 herumgeführt ist. An dem anderen Ende ist das Zugelement 21 mit dem Rückstellmittel 13, das hier als Federelement ausgebildet ist, verbunden.

Der um die Lochblende 6 geführte Abschnitt des Zugelements 21 und der hierzu korrespondierende Abschnitt der Lochblende 6 sind zumindest abschnittsweise als Riementrieb, vorzugsweise als Zahnriementrieb, ausgestaltet. Durch Ziehen des Zugelements 21 an einer der beiden Enden wird die Lochblende 6 in die entsprechende Richtung gedreht. Durch die Ausgestaltung des um die Lochblende 6 geführten Abschnitt des Zugelementes und des hierzu korrespondierenden Abschnitts der Lochblende als Riementrieb ist eine optimale Kraftübertragung zum Drehen der Lochblende gewährleistet, die bei den vorkommenden Wasserdrücken benötigt wird.

Alternativ kann das an dem Formgedächtniselement 20 angeordnete Zugelement 21 auch teilweise um die Lochblende 6 geführt sein und an der Lochblende 6 befestigt sein. Die Rückstellfeder 13 kann ebenfalls teilweise in radialer Richtung um die Lochblende 6 geführt sein und an der Lochblende 6 befestigt sein. Das Wirkprinzip zum Drehen der Lochblende 6 entspricht hierbei im Wesentlichen dem vorstehend genannten Wirkprinzip, wobei hier allerdings aufgrund der Befestigung des Zugelementes 21 und des Federelementes 13 an der Lochblende auf eine riementriebartige Ausgestaltung des Zugelementes und der Lochblende verzichtet werden kann.

Die in Fig. 4 gezeigte Ausgestaltung des Stellmittels zusammen mit dem Rückstellmittel kann in entsprechender Weise auch zum Drehen der in Fig. 1 und Fig. 2 gezeigten Bolzen 3 verwendet werden.

Fig. 5 zeigt eine weitere erfindungsgemäße Ausgestaltung einer Einrichtung zum Steuern einer Düse.

Das Steuermittel wird hier von einer Blende bzw. Irisblende 8 gebildet, die eine Anzahl von Lamellen 8a aufweist. Durch Bewegen der Lamellen mit dem Stellmittel kann der Querschnitt der Wasseraustrittsöffnung vergrößert bzw. verkleinert werden. Den Lamellen 8a ist jeweils ein Formgedächtniselement 20, etwa ein Formgedächtnisdraht, zugeordnet, dessen Länge bei einer Temperaturbeaufschlagung reduziert wird und so ein Verschwenken der Lamellen radial nach außen bewirkt, sodass der Querschnitt der Wasseraustrittsöffnung vergrößert wird. Ein Verschwenken der Lamellen 8a radial nach innen wird jeweils mit einem den Lamellen zugeordnetes Rückstellmittel (in Fig. 5 nicht gezeigt) bewerkstelligt.

Die Verwendung einer Irisblende 8 hat den Vorteil, dass der Querschnitt der Wasseraustrittsöffnung nahezu stufenlos vergrößert bzw. verkleinert werden kann.

**Fig. 6** zeigt eine weitere erfindungsgemäße Ausgestaltung einer Einrichtung zum Steuern einer Düse.

Die Düse weist hier zwei Fluid- bzw. Wasserkanäle 1a auf, wobei der eine Wasserkanal um einen bestimmten Winkel geneigt relativ zum anderen Wasserkanal angeordnet ist. Der eine Wasserkanal ermöglicht dabei, dass der Austrittswinkel des austretenden Wassers verschieden vom Austrittswinkel des austretenden Wassers aus dem anderen Wasserkanal ist.

Das Steuermittel wird hier von einem Schieber 4 gebildet, der wassereintrittsseitig der Wasserkanäle 1a angeordnet ist und in radialer Richtung relativ zur Düse bewegbar ist. Das Bewegen des Schiebers 4 in eine Richtung wird durch das Stellmittel bewirkt, während das Bewegen in die andere Richtung durch das Rückstellmittel 13 bewirkt wird.

Der Schieber 4 weist hierbei eine Querschnittsfläche auf, die mindestens so groß ist wie der größere Querschnitt der beiden Wasserkanäle 1a. Damit ist gewährleistet, dass der Schieber 4 bei geeigneter Verschiebeposition den Wasseraustritt durch einen der beiden Wasserkanäle 1a verhindern kann.

In Abbildung (a) ist ein Schieber 4 gezeigt, der in der dort gezeigten Verschiebeposition den unteren Wasserkanal der beiden Wasserkanäle 1a verschließt und damit einen Wasseraustritt aus dem unteren Wasserkanal verhindert.

Der Schieber 4 kann auch so dimensioniert sein, dass er bei geeigneter Verschiebeposition einen Wasseraustritt aus beiden Wasserkanälen verhindert. In Abbildung (b) ist ein Schieber 4 gezeigt, der in der dort gezeigten Verschiebeposition beide Wasserkanäle 1a verdeckt und dadurch einen Wasseraustritt aus beiden Wasserkanälen 1a verhindert.

In einer Ausgestaltung kann der Schieber 4 auch so dimensioniert sein, dass er bei einer geeigneten Verschiebeposition den Wasseraustritt aus beiden Wasserkanälen 1a freigibt. Ein entsprechend ausgestalteter Schieber 4 ist in Abbildung (c) gezeigt. Bei der in Abbildung (c) gezeigten Verschiebeposition des Schiebers 4 ist der Wasseraustritt aus beiden Wasserkanälen freigegeben. Durch ein Verschieben des Schiebers 4 nach oben bzw. nach unten wird der Wasseraustritt aus dem oberen Wasserkanal bzw. aus dem unteren Wasserkanal blockiert.

Selbstverständlich können auch mehr als die in Fig. 6 gezeigten Wasserkanäle vorgesehen sein.

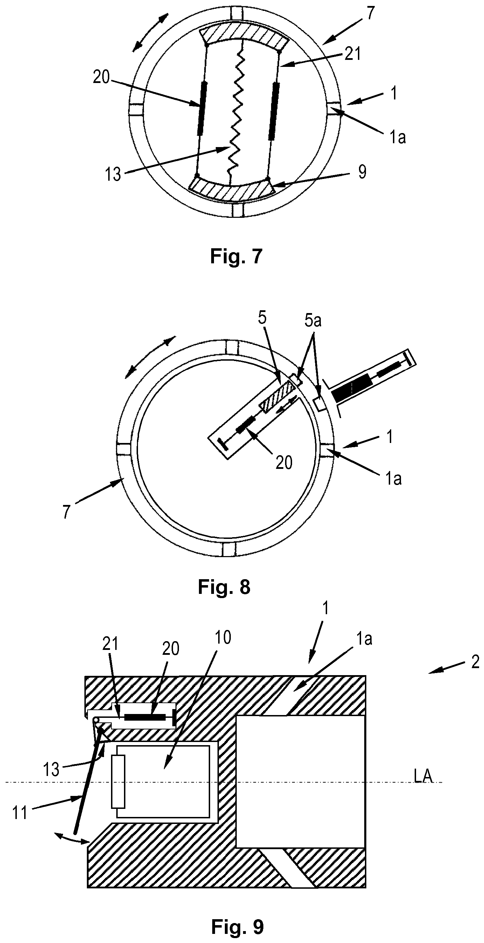

**Fig. 7** zeigt ein Beispiel einer erfindungsgemäßen Einrichtung zum Steuern einer Düse.

Die Düsen sind hier an einem Düsenring angeordnet, sodass das Wasser im Wesentlichen in radialer Richtung relativ zum Düsenring 7 aus den Wasserkanälen 1a entweicht. Der Düsenring 7 kann drehbar an einem Spülkopf angeordnet sein, sodass der Austrittswinkel des aus den Düsen austretenden Wassers relativ zum Spülkopf verändert werden kann. Zum Einstellen eines vorbestimmten Austrittswinkels wird der Düsenring 7 so lange gedreht, bis der entsprechende Austrittswinkel erreicht ist. In dieser Position wird der Düsenring 7 mit Hilfe von zwei Bremsbacken 9 blockiert, sodass der Düsenring sich nicht weiter drehen kann. Die Bremsbacken sind in axialer Richtung versetzt zu den Wasserkanälen 1a angeordnet, sodass die Bremsbacken 9 den Wasseraustritt aus den Düsen 1a nicht behindern.

Bei der in Fig. 7 gezeigten Ausgestaltung sind die Bremsbacken 9 innerhalb des Düsenringes angeordnet und werden beim Bremsen gegen die Innenwandung des Düsenringes gepresst. In einer alternativen Ausgestaltung können die Bremsbacken 9 auch außerhalb des Düsenringes angeordnet werden und beim Bremsen gegen eine Außenwandung des Düsenringes gepresst werden.

Bei der in Fig. 7 gezeigten Ausgestaltung wird der Anpressdruck durch das Rückstellmittel 13, das hier als Druckfeder ausgestaltet ist, bereitgestellt. Das Lösen der Bremsbacken, d.h. das Freigeben des Düsenringes 7, wird durch die Stellmittel bewerkstelligt, die jeweils ein Formgedächtniselement, insbesondere einen Formgedächtnisdraht 20 aufweisen, dessen Länge bei einer Temperaturbeaufschlagung reduziert wird. Bei Reduzierung der beaufschlagten Temperatur nimmt die Länge der Formgedächtniselemente 20 wieder zu und das Rückstellmittel 13 presst die Bremsbacken 9 wieder gegen die Innenwandung des Düsenrings.

In einer alternativen Ausgestaltung kann zwischen den beiden Bremsbacken 9 auch ein Formgedächtniselement 20 angeordnet sein, dessen Länge sich bei einer Temperaturbeaufschlagung vergrößert, sodass das aktivierte Formgedächtniselement die beiden Bremsbacken 9 gegen den Düsenring 7 presst. Das Rückstellmittel 13 ist in diesem Fall als Zugfeder ausgestaltet, die die Bremsbacken 9 wieder löst, wenn die Formgedächtniselemente 20 nicht mehr mit einer Temperatur beaufschlagt werden.

**Fig. 8** zeigt eine weitere Ausgestaltung einer erfindungsgemäßen Einrichtung zum Steuern einer Düse. Die Düsen 1 sind hier ebenfalls an einem Düsenring 7 angeordnet, wie mit Bezug auf Fig. 7 erläutert. Anstelle von Bremsbacken ist hier allerdings ein Riegel 5 als Steuermittel vorgesehen, das in radialer Richtung relativ zum Düsenring bewegbar ist. In einer Verriegelungsposition greift der Riegel 5 in eine Aussparung 5a im Düsenring 7 ein, sodass ein Drehen des Düsenrings verhindert wird. In einer Verriegelungsposition wird der Düsenring 7 für ein Drehen freigegeben. Das Stellmittel kann entweder radial innerhalb des Düsenringes oder radial außerhalb des Düsenringes 7 angeordnet sein, wobei die Aussparung 5a entsprechend an der Innenwandung des Düsenringes oder an der Außenwandung des Düsenringes 7 vorgesehen ist.

Bei der in Fig. 8 gezeigten Ausgestaltung des Stellmittels weist dieses ein Formgedächtniselement 20 auf, das über Zugelemente mit dem Riegel 5 bzw. mit einer Befestigungseinheit verbunden ist. Ein Aktivieren des Formgedächtniselements 20, d.h. bei einer Temperaturbeaufschlagung des Formgedächtniselements, wird der Riegel 5 von der Verriegelungsposition in die Entriegelungsposition bewegt. Ein Bewegen des Riegels 5 von der Entriegelungsposition in die Verriegelungsposition folgt mit einem Rückstellmittel, das als Druckfeder ausgestaltet sein kann (in Fig. 8 nicht gezeigt).

In einer alternativen Ausgestaltung kann ein Formgedächtniselement 20 vorgesehen sein, das direkt mit dem Riegel 5 und mit der Befestigungseinheit 12 gekoppelt ist und dessen Länge sich bei einer Temperaturbeaufschlagung vergrößert. Das Formgedächtniselement bewegt dann bei einer Temperaturbeaufschlagung den Riegel 5 von der Entriegelungsposition in die Verriegelungsposition. Entsprechend ist ein Rückstellmittel 13 vorgesehen, das den Riegel 5 von der Verriegelungsposition in die Entriegelungsposition bringt.

**Fig. 9** zeigt einen erfindungsgemäßen Spülkopf, in dem mehrere Düsen 1 angeordnet sind. Die Düsen 1 können jeweils mit einer erfindungsgemäßen Einrichtung gesteuert werden.

Ferner ist an der Vorderseite des Spülkopfes 2 eine Aussparung vorgesehen, in der eine Bildaufnahmeeinrichtung 10 angeordnet werden kann. Vorzugsweise kann die Bildaufnahmeeinrichtung 10 lösbar in dieser Aussparung angeordnet werden, sodass die Bildaufnahmeeinrichtung einfach gewechselt werden kann. Die Bildaufnahmeeinrichtung kann eine Videokamera oder eine Bildkamera umfassen.

Vor der Aussparung für die Bildaufnahmeeinrichtung 10 ist eine Schutzklappe 11 angeordnet, die beispielsweise während eines Spülvorganges geschlossen werden kann, um die in der Aussparung angeordnete Bildaufnahmeeinrichtung 10 zu schützen. Die Schutzklappe 11 kann aus einem transparenten Material gefertigt sein.

Die Schutzklappe 11 ist mit einem Stellmittel gekoppelt, das ein Formgedächtniselement 20 aufweist. Über ein Zugelement 21 ist das Formgedächtniselement 20 mit der Schutzklappe verbunden. Wird das Formgedächtniselement 20 mit einer Temperatur beaufschlagt, verringert sich die Länge des Formgedächtniselements 20 und die schwenkbar an dem Spülkopf angelenkte Schutzklappe 11 wird geöffnet. Zudem ist die Schutzklappe 11 mit einem Rückstellmittel, etwa eine Rückstellfeder 13, gekoppelt, die die Schutzklappe 11 wieder schließt, wenn das Formgedächtniselement 20 nicht mehr mit einer Temperatur beaufschlagt wird. Die Rückstellfeder 13 kann auch direkt an der Schwenkachse angeordnet sein.

In der hier gezeigten Ausgestaltung wird das Zugelement 21 an einer Umlenkrolle umgelenkt und zur Schutzklappe geführt.

Zum Schutz der in der Aussparung angeordneten Bildaufnahmeeinrichtung kann auch eine mit Bezug auf Fig. 5 gezeigte Irisblende vorgesehen werden, wobei die Irisblende mindestens so weit geöffnet werden kann, dass das Blickfeld der Bildaufnahmeeinrichtung 10 nicht beeinträchtigt wird.

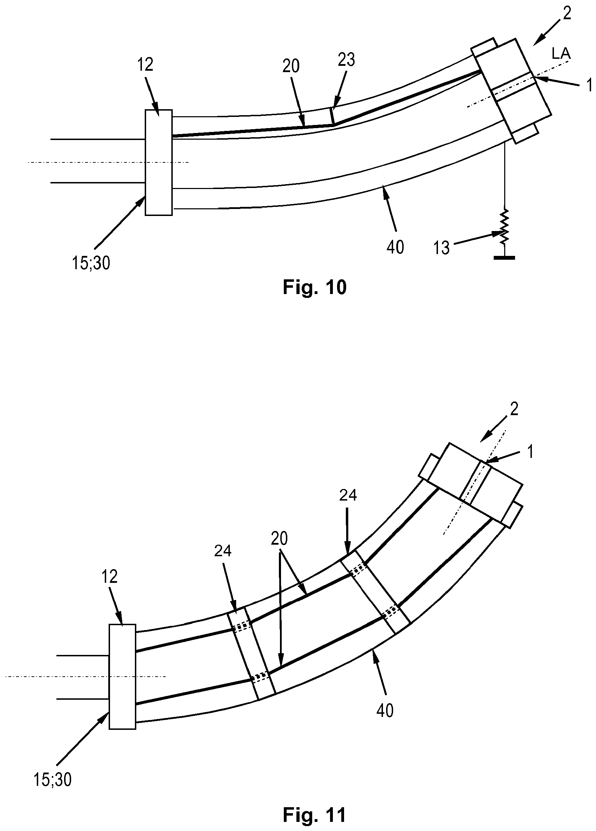

**Fig. 10** zeigt eine weitere erfindungsgemäße Ausgestaltung einer Einrichtung zum Steuern einer Düse. In dem Spülkopf 2 ist die Düse 1 angeordnet. Der Spülkopf kann mehrere Düsen aufweisen, wobei der Querschnitt der Wasserkanäle der Düsen unterschiedlich ausgestaltet sein kann und wobei die Wasserkanäle der Düsen unterschiedlich ausgerichtet sein können.

Der Spülkopf 2 ist an einem vorderen Ende eines flexiblen Spülschlauches angeordnet. In dem Spülschlauch 40 ist ein Wasserkanal ausgebildet, durch den das Spülwasser dem Spülkopf zugeführt wird. Am anderen Ende des Spülschlauches 40 ist dieser an einer Befestigungseinheit 12 befestigt, die eine Bohrung aufweist, durch die das Spülwasser dem Spülschlauch zugeführt werden kann.

In der Wandung des Spülschlauches ist ein Formgedächtniselement, insbesondere ein Formgedächtnisdraht, angeordnet, der einerseits mit der Befestigungseinheit 12 und andererseits an einer weiteren Befestigungseinheit am vorderen Ende des Spülschlauches oder an dem an dem vorderen Ende des Spülschlauches befestigten Spülkopf befestigt ist. Durch Beaufschlagung des Formgedächtniselements 20 mit einer Temperatur verringert sich die Länge des Formgedächtniselements. Aufgrund der reduzierten Länge des Formgedächtniselements wird der Spülschlauch nach oben gebogen. Mit einem Rückstellmittel 13, das hier als Rückstellfeder ausgebildet ist, wird der Spülschlauch 40 wieder in eine Neutralstellung gebracht, wenn das Formgedächtniselement 20 nicht mehr mit einer Temperatur beaufschlagt wird.

Anstelle einer Rückstellfeder 13 kann in dem Spülschlauch auch ein Biegestab angeordnet sein, der eine gewisse Rückstellkraft aufweist. Nach dem Auslenken des Spülschlauches aus seiner Neutralstellung bewirkt die Rückstellkraft des Biegestabes, dass der Schlauch wieder in seine Neutralstellung gebracht wird. In einer alternativen Ausgestaltung kann der Spülschlauch 40 selbst eine gewisse Rückstellkraft aufweisen, sodass der Spülschlauch selbstständig wieder in seine Neutralstellung zurückkehren kann, wenn das Formgedächtniselement 20 nicht mehr mit einer Temperatur beaufschlagt wird.

**Fig. 11** zeigt eine weitere Ausgestaltung einer erfindungsgemäßen Einrichtung zum Steuern einer Düse. Der grundsätzliche konstruktive Aufbau entspricht im Wesentlichen dem in Fig. 10 gezeigten Ausführungsbeispiel. Im Unterschied zu dem in Fig. 10 gezeigten Ausführungsbeispiel weist das Stellmittel hier zwei Formgedächtniselemente bzw. Formgedächtnisdrähte 20 auf, die jeweils mit der Befestigungseinheit 12 und mit der Spüldüse 2 verbunden sind und in radialer Richtung außerhalb der Längsachse des Spülschlauches angeordnet sind bzw. in der Wandung des Spülschlauches eingearbeitet sind. Durch Vorsehen von zwei Formgedächtnisdrähten 20 kann der Spülschlauch in zwei Richtungen gebogen bzw. ausgelenkt werden, nämlich in Richtung des ersten Formgedächtnisdrahtes und in Richtung des zweiten Formgedächtnisdrahtes. Werden beide Formgedächtniselemente 20 gleichzeitig erhitzt, sodass sich die beiden Formgedächtniselemente gleich stark oder unterschiedlich stark verkürzen, kann der Spülschlauch 40 auch in eine Richtung ausgelenkt bzw. gebogen werden, die zwischen den beiden Formgedächtniselementen liegt.

Bei der in Fig. 6 gezeigten Ausgestaltung weist der Spülschlauch 40 eine Anzahl (hier zwei) von Führungsmitteln 24 auf, die als Führungsscheiben ausgebildet sein können und die für jedes Formgedächtniselement eine Bohrung aufweisen, die im Wesentlichen parallel zur Längsachse des Spülschlauches verlaufen. Durch diese Bohrungen werden die Formgedächtnisdrähte 20 hindurchgeführt. Die Führungsmittel bzw. Führungsringe 24 sind vorzugweise in die Wandung des Spülschlauches 40 eingearbeitet.

Die Formgedächtniselemente bzw. die Formgedächtnisdrähte 20 verlaufen innerhalb der Wandung des Spülschlauches in einem dafür vorgesehenen Kanal, der einen Durchmesser aufweist, der größer als der Durchmesser der Formgedächtnisdrähte ist. Mit den Führungsmitteln bzw. Führungsringen wird gewährleistet, dass die Formgedächtnisdrähte beim Erhitzen und beim Abkühlen sowie bei einer Neutralstellung des Spülschlauches 40 immer auf einer vorgegebenen Bahn innerhalb der Kanäle für die Formgedächtnisdrähte verlaufen.

Bei Vorsehen von drei Formgedächtniselementen bzw. Formgedächtnisdrähten 20, die in radialer Richtung gleichmäßig an dem Spülschlauch bzw. in der Wandung des Spülschlauches angeordnet sind, kann der Spülschlauch 40 im Umkreis von 360° in jede beliebige Richtung und im Wesentlichen um jede beliebige Amplitude ausgelenkt werden, wobei die gewünschte Auslenkrichtung und Auslenkamplitude durch eine entsprechend Erwärmung der jeweiligen Formgedächtnisdrähte 20 erreicht wird. Es können auch mehr als drei Formgedächtnisdrähte vorgesehen sein, um ein Auslenken bzw. Abbiegen des Spülschlauches in jede beliebige Richtung zu ermöglichen. Werden die drei Formgedächtnisdrähte 20 gleich stark erhitzt, sodass die Formgedächtnisdrähte jeweils die gleiche Länge aufweisen, befindet sich der Spülschlauch in seiner Neutralstellung. Werden die drei Formgedächtnisdrähte nicht mehr mit einer Temperatur beaufschlagt, sorgt das Rückstellmittel (vgl. Beschreibung zu Fig. 10) dafür, dass der Spülschlauch 40 wieder in seine Neutralstellung zurückkehrt.

In einer Ausgestaltung der Erfindung kann die Wandung des Spülschlauches selbst aus einem Formgedächtnismaterial bestehen. Dabei werden vorzugsweise Formgedächtnismaterialien verwendet, die den sogenannten Zwei-Weg-Memory-Effekt aufweisen. Beim Erwärmen der Spülschlauchwandung ändert sich die Form des Spülschlauches, sodass der an dem vorderen Ende des Spülschlauches angeordnete Spülkopf ausgelenkt wird. Beim Abkühlen der Spülschlauchwandung nimmt der Spülschlauch wieder seine ursprüngliche Form an und kehrt in seine Neutralstellung zurück. Das Zurückkehren in die Neutralstellung kann mit einem Rückstellmittel 13 unterstützt werden.

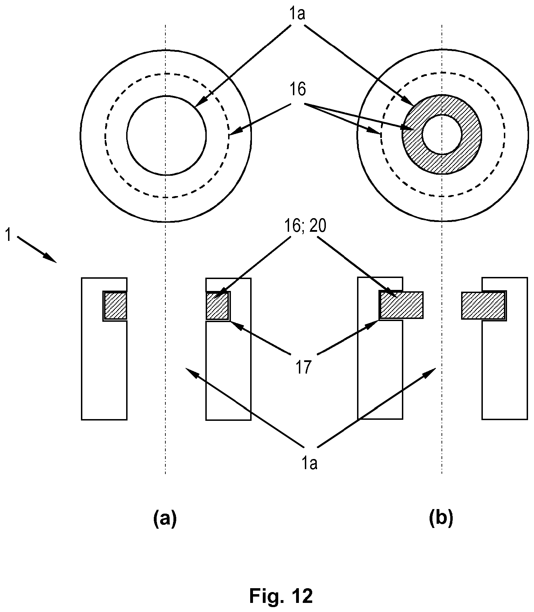

**Fig. 12** zeigt eine noch weitere Ausgestaltung einer erfindungsgemäßen Einrichtung zum Steuern einer Düse.

In dem Wasserkanal 1a ist konzentrisch zur Längsachse des Wasserkanals ein Ring 16 angeordnet, der ein konzentrisches Durchgangsloch aufweist. Der Ring 16 greift in eine an der Innenwandung des Wasserkanals vorgesehene umlaufende Nut ein.

Der Ring 16 ist aus einem Formgedächtnismaterial hergestellt. Bei Beaufschlagung des aus einem Formgedächtnismaterial bestehenden Ringes 16 mit einer Temperatur nimmt dieser eine Form an, bei der das Durchgangsloch des Ringes einen kleineren Durchmesser aufweist. Wird der Ring 16 nicht mehr mit einer Temperatur beaufschlagt, nimmt dieser wieder seine ursprüngliche Form ein und der Durchmesser des Durchgangsloches des Ringes vergrößert sich wieder.

Vorteilhafter Weise werden hier solche Formgedächtnismaterialien verwendet, die den sogenannten Zwei-Weg-Memory-Effekt aufweisen. D.h., dass sich der Ring 16 an zwei Formen "erinnern" kann, nämlich an eine Form bei einer hohen Temperatur und an eine Form bei einer niedrigen Temperatur. Obwohl der Ring aus dem Formgedächtnismaterial beim Abkühlen keine Arbeit verrichten kann, müssen keine Rückstellmittel vorgesehen werden, weil der Ring beim Abkühlen auch keine Arbeit verrichten muss. Die Stellkraft des Ringes 16 beim Erhöhen der Temperatur ist ausreichend, um selbst bei einem unter hohem Druck aus dem Wasserkanal austretenden Wasser den Durchmesser des Durchgangsloches des Ringes zu verringern.

Mit den vorstehend genannten erfindungsgemäßen Einrichtungen zum Steuern einer Düse können die Düsen besonders kompakt hergestellt werden. Gleichzeitig können der Betriebszustand, der Querschnitt der Austrittsöffnung und/oder der Austrittswinkel des aus der Düse austretenden Wassers an die jeweiligen Erfordernisse angepasst bzw. eingestellt werden. Damit sind besonders kompakt ausgestaltete und besonders flexibel einsetzbare Spülköpfe realisierbar. Zudem entfallen elektrische bzw. elektromechanische Stellmittel, sodass einerseits eine kostengünstigere Herstellung von Spülköpfen ermöglicht wird und andererseits die Spülköpfe weniger wartungsintensiv sind.

### Bezugszeichen:

- 1: Düse
- 1a: Wasserkanal der Düse 1
- 2: Spülkopf mit Düsen und ggf. einer Bildaufnahmeeinrichtung 10
- 3: Bolzen mit Kanal 3a
- 3a: Kanal im Bolzen 3 bzw. Loch in der Lochblende 6
- 4: Schieber
- 5: Riegel
- 5a: Aussparung zur Aufnahme des Riegels 5
- 6: Lochblende (Scheibe mit Kanäle 3a)
- 7: Düsenring
- 8: Blende (Irisblende)
- 8a: Lamellen der Blende 8
- 9: Bremsbacken
- 10: Bildaufnahmeeinrichtung
- 11: Schutzklappe
- 12: Befestigungseinheit
- 13: Rückstellmittel, z.B. Rückstellfeder
- 15: Platine der Steuer- und/oder Regeleinrichtung
- 20: Formgedächtniselement
- 21: Zugelement (z.B. Draht oder Seil)
- 23: Umlenkeinrichtung (z.B. Umlenkrolle)
- 24: Führungsmittel
- 30: Steuer- und/oder Regeleinrichtung
- 40: Spülschlauch
- LA: Längsachse

## Patentansprüche

1. Kanalreinigungssystem, aufweisend zumindest einen Spülkopf, wobei der Spülkopf zumindest eine Düse (1) und zumindest eine Einrichtung zum Steuern der zumindest einen Düse (1) aufweist, wobei die Düse ein Düsengehäuse aufweist, in dem ein Fluidkanal (1a) ausgebildet ist, durch den ein der Düse unter Druck zugeführtes Fluid, insbesondere Wasser hindurchströmt, **dadurch gekennzeichnet, dass** der Düse zumindest ein Formgedächtniselement (20) zugeordnet ist, mit dem ein Betriebszustand (auf/zu) des Fluidkanals, ein Querschnitt der Fluidaustrittsöffnung des Fluidkanals und/oder ein Austrittswinkel des aus der Düse austretenden Fluides einstellbar ist.

2. Kanalreinigungssystem nach Anspruch 1, wobei
- der Düse ein Steuermittel (3; 4; 5; 6; 8; 9; 16; 40) zugeordnet ist, mit dem der Betriebszustand, der Querschnitt und/oder der Austrittswinkel einstellbar ist, und
- das Steuermittel mit einem Stellmittel gekoppelt ist, um das Steuermittel relativ zum Düsengehäuse zu bewegen,
wobei das Stellmittel zumindest teilweise durch das zumindest eine Formgedächtniselement (20) gebildet wird, wobei das Formgedächtniselement (20) in Abhängigkeit von zumindest einer Einflussgröße seine Form ändert, wobei die Formänderung des Formgedächtniselements (20) das Bewegen des Steuermittels relativ zum Düsengehäuse bewirkt.

3. Kanalreinigungssystem nach Anspruch 2, wobei das Formgedächtniselement (20) ein längliches Formgedächtniselement ist, das in Abhängigkeit von der Einflussgröße seine Länge ändert und aufgrund der Längenänderung das Steuermittel mit einer Stellkraft beaufschlagt.

4. Kanalreinigungssystem nach einem der Ansprüche 2 bis 3, wobei das Stellmittel zusätzlich zumindest ein Zugelement (21) aufweist, welches einerseits mit dem Formgedächtniselement (20) und andererseits mit dem Steuermittel verbunden ist.

5. Kanalreinigungssystem nach einem der Ansprüche 2 bis 4, wobei die Einflussgröße die Temperatur des Formgedächtniselements (20) ist und wobei die für ein vorbestimmtes Bewegen des Steuermittels relativ zum Düsengehäuse benötigte Temperatur dem Formgedächtniselement (20) direkt oder indirekt beaufschlagbar ist, wobei das Formgedächtniselement (20) mit einer Steuer- und/oder Regeleinrichtung (30) gekoppelt ist, die angepasst ist, das Formgedächtniselement (20) mit der für ein vorbestimmtes Bewegen des Steuermittels relativ zum Düsengehäuse benötigten Temperatur zu beaufschlagen.

6. Kanalreinigungssystem nach dem vorhergehenden Anspruch, wobei die Steuer- und/oder Regeleinrichtung (30) angepasst ist, elektrischen Strom in das Formgedächtniselement (20) einzuspeisen oder durch das Formgedächtniselement (20) zu leiten, um es dadurch zu erwärmen.

7. Kanalreinigungssystem nach einem der vorhergehenden Ansprüche 2 bis 6, wobei diese mindestens ein mit dem Steuermittel zusammenwirkendes Rückstellmittel (13) aufweist, wobei eine Rückstellkraft des Rückstellmittels (13) entgegen der Stellkraft des Stellmittels wirkt, wobei das Rückstellmittel (13) vorzugsweise zumindest ein Federelement umfasst.

8. Kanalreinigungssystem nach einem der Ansprüche 2 bis 7, wobei das Steuermittel einen zylinderförmigen Bolzen (3) umfasst, der zumindest teilweise in dem Fluidkanal (1a) und quer zum Fluidkanal (1a) und um seine Längsachse drehbar angeordnet ist und einen Durchmesser aufweist, der größer ist als der Durchmesser des Fluidkanals, wobei der Bolzen einen quer durch den Bolzen verlaufenden Kanal (3a) aufweist, wobei der Bolzen (3) mit dem Stellmittel von einer ersten Position, in der der Kanal (3a) des Bolzens den Fluidkanal (1a) der Düse (1) für ein Durchströmen des Fluides durch den Fluidkanal zumindest teilweise freigibt, in eine zweite Position, in der der Bolzen den Fluidkanal der Düse für ein Durchströmen des Fluides durch den Fluidkanal sperrt, drehbar ist.

9. Kanalreinigungssystem nach dem vorhergehenden Anspruch, wobei der Bolzen (3) so relativ zum Fluidkanal (1a) der Düse (1) angeordnet ist, dass der Kanal (3a) des Bolzens einen Wasseraustrittskanal der Düse bildet, wobei ein Drehen des Bolzens eine Änderung des Austrittswinkels des aus der Düse austretenden Fluides bewirkt und/oder wobei der Kanal (3a) des Bolzens (3) fluideintrittsseitig einen größeren Durchmesser aufweist als fluidaustrittsseitig, vorzugsweise einen größeren Durchmesser, als das dem Bolzen zugewandte Ende des Fluidkanals (1a) der Düse (1).

10. Kanalreinigungssystem nach einem der Ansprüche 2 bis 7, wobei
- das Steuermittel einen Riegel (5) umfasst, der quer zum Fluidkanal (1a) der Düse (1) angeordnet ist und mit dem Stellmittel in radialer Richtung relativ zum Fluidkanal (1a) bewegbar ist, wobei der Riegel von einer ersten Position, in der der Riegel den Fluidkanal der Düse für ein Durchströmen des Fluides durch den Fluidkanal sperrt, in eine zweite Position, in der der Riegel den Fluidkanal der Düse für ein Durchströmen des Fluides durch den Fluidkanal zumindest teilweise freigibt, bewegbar ist, und/oder
- das Steuermittel eine Lochblende (6) mit einem ersten Loch (3a) umfasst, die fluidkanalausgangsseitig drehbar an der Düse (1) angeordnet ist, wobei in einer ersten Drehposition der Lochblende relativ zur Düse das erste Loch (3a) mit einer Fluidaustrittsöffnung des Fluidkanals (1a) der Düse (1) korrespondiert und den Fluidaustritt aus dem Fluidkanal durch das erste Loch freigibt, und wobei in einer weiteren Drehposition der Lochblende relativ zur Düse (1) die Lochblende einen Fluidaustritt aus dem Fluidkanal verhindert, und/oder
- das Steuermittel eine Blende (8), insbesondere eine Irisblende, mit mehreren relativ zueinander und quer zum Fluidkanal (1a) bewegbaren Lamellen (8a) umfasst, die fluidkanalausgangsseitig an der Düse (1) angeordnet ist, wobei zumindest eine der Lamellen (8a) mit dem Stellmittel gekoppelt ist und mit dem Stellmittel bewegbar ist, wobei ein Bewegen der Lamellen ein Vergrößern oder ein Verkleinern des Querschnittes der Fluidaustrittsöffnung der Düse bewirkt, und/oder
- das Steuermittel einen Schieber (4) umfasst, der mit dem Stellmittel in radialer Richtung quer zur Längsachse (LA) der Düse (1) zwischen einer ersten Schieberposition und einer zweiten Schieberposition hin und her bewegbar ist, wobei in dem Düsengehäuse zumindest ein erster Fluidkanal und ein zweiter Fluidkanal ausgebildet sind, wobei bei der ersten Schieberposition der Schieber den Fluidaustritt aus dem ersten Fluidkanal verhindert und wobei bei der zweiten Schieberposition der Schieber den Fluidaustritt aus dem zweiten Fluidkanal verhindert, wobei der Schieber mit dem Stellmittel vorzugsweise in eine dritte Schieberposition, die zwischen der ersten Schieberposition und der zweiten Schieberposition liegt, bewegbar ist und wobei bei der dritten Schieberposition der Schieber den Fluidaustritt aus beiden Fluidkanälen verhindert oder den Fluidaustritt aus beiden Fluidkanälen freigibt, und/oder
- das Düsengehäuse einen Düsenring (7) aufweist, in dem der Fluidkanal (1a) ausgebildet ist, wobei der Düsenring (7) drehbar auf dem Spülkopf gelagert ist und wobei das Steuermittel zumindest eine Bremsbacke (9) umfasst, die mit dem Stellmittel bewegbar ist und gegen einen Innenwandungsabschnitt des Düsenrings drückbar ist, um eine Drehung des Düsenring zu blockieren, und/oder
- das Düsengehäuse einen Düsenring (7) umfasst, in dem der Fluidkanal (1a) ausgebildet ist, wobei der Düsenring drehbar auf dem Spülkopf gelagert ist und wobei das Steuermittel einen Riegel (5) umfasst, der mit dem Stellmittel relativ zur Düse in radialer Richtung nach außen und nach innen bewegbar ist, wobei der Düsenring eine Aussparung (5c) aufweist, in die der Riegel (5) in Eingriff bringbar ist, um ein Drehen des Düsenringes zu blockieren, und/oder
- das Steuermittel einen Spülschlauch (40) umfasst, in dem ein Wasserkanal ausgebildet ist und an dessen vorderen Ende zumindest eine Düse oder ein Spülkopf angeordnet ist, wobei der Spülschlauch (40), insbesondere die Wandung des Spülschlauches, zumindest abschnittsweise das Formgedächtniselement aufweist, wobei ein Verkürzen des Formgedächtniselements (20) ein Biegen des Spülschlauches (40) bewirkt.

11. Kanalreinigungssystem nach einem der Ansprüche 2 bis 7, wobei das Formgedächtniselement (20) als Ring (19) ausgebildet ist, der koaxial zum Fluidkanal (1a) in dem Fluidkanal (1a) angeordnet ist, wobei der Ring (16) bei Beaufschlagung mit der Einflussgröße seine Form derart ändert, dass sich der Durchmesser des Ringloches verkleinert.

12. Kanalreinigungssystem nach einem der vorhergehenden Ansprüche, wobei das Formgedächtniselement (20) ein Formgedächtnismaterial mit einem Zwei-Weg-Memory-Effekt aufweist.

## Claims

1. Sewer cleaning system, comprising at least one flushing head, the flushing head comprising at least one nozzle (1) and at least one device for controlling the at least one nozzle (1), the nozzle comprising a nozzle housing in which a fluid channel (1a) is formed, through which a fluid, in particular water, supplied to the nozzle flows under pressure, **characterized in that** the nozzle is associated with at least one shape memory element (20), by means of which an operating state (open/closed) of the fluid channel, a cross section of the fluid outlet opening of the fluid channel and/or an exit angle of the fluid exiting the nozzle can be adjusted.

2. Sewer cleaning system according to claim 1, wherein
- the nozzle is associated with a control means (3; 4; 5; 6; 8; 9; 16; 40), by means of which the operating state, the cross section and/or the exit angle can be adjusted, and
- the control means is coupled to a positioning means in order to move the control means relative to the nozzle housing,
wherein the positioning means is at least partially formed by the at least one shape memory element (20), wherein the shape memory element (20) changes the shape thereof depending on at least one influencing variable, wherein the change in shape of the shape memory element (20) causes the control means to move relative to the nozzle housing.

3. Sewer cleaning system according to claim 2, wherein the shape memory element (20) is an elongate shape memory element which changes the length thereof depending on the influencing variable and applies a positioning force to the control means due to the change in length.

4. Sewer cleaning system according to any of claims 2 to 3, wherein the positioning means additionally comprises at least one pull element (21) which is connected at one end to the shape memory element (20) and at the other end to the control means.

5. Sewer cleaning system according to any of claims 2 to 4, wherein the influencing variable is the temperature of the shape memory element (20) and wherein the temperature required for a predetermined movement of the control means relative to the nozzle housing can be applied directly or indirectly to the shape memory element (20), wherein the shape memory element (20) is coupled to an open- and/or closed-loop control device (30) which is adapted to apply the temperature which is required for a predetermined movement of the control means relative to the nozzle housing to the shape memory element (20).

6. Sewer cleaning system according to the preceding claim, wherein the open- and/or closed-loop control device (30) is adapted to feed electrical current into the shape memory element (20) or to conduct electrical current through the shape memory element (20) in order to heat said element.

7. Sewer cleaning system according to any of the preceding claims 2 to 6, wherein the sewer cleaning system comprises at least one restoring means (13) which interacts with the control means, wherein a restoring force of the restoring means (13) counteracts a positioning force of the positioning means, wherein the restoring means (13) preferably has at least one spring element.

8. Sewer cleaning system according to any of claims 2 to 7, wherein the control means has a cylindrical bolt (3) which is arranged at least in part in the fluid channel (1a) and transversely with respect to the fluid channel (1a) and so as to be rotatable about the longitudinal axis thereof, and has a diameter which is greater than the diameter of the fluid channel, wherein the bolt comprises a channel (3a) extending transversely through the bolt, wherein the bolt (3) can be rotated from a first position, in which the channel (3a) of the bolt at least partially releases the fluid channel (1a) of the nozzle (1) for the fluid to flow through the fluid channel, into a second position, in which the bolt blocks the fluid channel of the nozzle for the fluid to flow through the fluid channel, by means of the positioning means.

9. Sewer cleaning system according to the preceding claim, wherein the bolt (3) is arranged relative to the fluid channel (1a) of the nozzle (1) such that the channel (3a) of the bolt forms a water outlet channel of the nozzle, wherein a rotation of the bolt causes a change in the outlet angle of the fluid exiting the nozzle and/or wherein the channel (3a) of the bolt (3) has a larger diameter on the fluid inlet side than on the fluid outlet side, preferably a larger diameter than the end of the fluid channel (1a) of the nozzle (1) that faces the bolt.

10. Sewer cleaning system according to any of claims 2 to 7, wherein
- the control means has a bar (5) which is arranged transversely with respect to the fluid channel (1a) of the nozzle (1) and can be moved in the radial direction relative to the fluid channel (1a) by means of the positioning means, wherein the bar can be moved from a first position, in which the bar blocks the fluid channel of the nozzle for the fluid to flow through the fluid channel, into a second position, in which the bar at least partially releases the fluid channel of the nozzle for the fluid to flow through the fluid channel, and/or
- the control means has a perforated diaphragm (6) having a first hole (3a) that is rotatably arranged on the nozzle (1) on the fluid channel outlet side, wherein, in a first rotational position of the perforated diaphragm relative to the nozzle, the first hole (3a) corresponds to a fluid outlet opening of the fluid channel (1a) to the nozzle (1) and allows fluid to exit the fluid channel through the first hole, and wherein, in a further rotational position of the perforated diaphragm relative to the nozzle (1), the perforated diaphragm prevents fluid from exiting the fluid channel, and/or
- the control means has a diaphragm (8), in particular an iris diaphragm, which comprises a plurality of lamellae (8a) which can be moved relative to one another and transversely to the fluid channel (1a) and which is arranged on the nozzle (1) on the fluid channel outlet side, wherein at least one of the lamellae (8a) is coupled to the positioning means and can be moved by means of the positioning means, wherein a movement of the lamellae causes an increase or a reduction in the cross section of the fluid outlet opening of the nozzle, and/or
- the control means has a slider (4) which, by means of the positioning means, can be moved back and forth in the radial direction transversely to the longitudinal axis (LA) of the nozzle (1) between a first slider position and a second slider position, wherein at least one first fluid channel and a second fluid channel are formed in the nozzle housing, wherein, in the first slider position, the slider prevents the fluid from exiting the first fluid channel and wherein, in the second slider position, the slider prevents the fluid from exiting the second fluid channel, wherein the slider can preferably be moved into a third slider position, which is between the first slider position and the second slider position, by means of the positioning means, and wherein, in the third slider position, the slider prevents fluid from exiting the two fluid channels or allows fluid to exit the two fluid channels, and/or
- the nozzle housing has a nozzle ring (7) in which the fluid channel (1a) is formed, wherein the nozzle ring (7) is rotatably mounted on the flushing head and wherein the control means has at least one brake shoe (9) which can be moved by means of the positioning means and can be pressed against an inner wall portion of the nozzle ring in order to block rotation of the nozzle ring, and/or
- the nozzle housing has a nozzle ring (7) in which the fluid channel (1a) is formed, wherein the nozzle ring is rotatably mounted on the flushing head and wherein the control means has a bar (5) which can be moved outward and inward in the radial direction relative to the nozzle by means of the positioning means, wherein the nozzle ring comprises a recess (5c) into which the bar (5) can be brought into engagement in order to block rotation of the nozzle ring, and/or
- the control means has a flushing hose (40) in which a water channel is formed and at the front end of which at least one nozzle or a flushing head is arranged, wherein the flushing hose (40), in particular the wall of the flushing hose, comprises the shape memory element at least in portions, wherein a shortening of the shape memory element (20) causes the flushing hose (40) to bend.

11. Sewer cleaning system according to any of claims 2 to 7, wherein the shape memory element (20) is designed as a ring (19) which is arranged coaxially with respect to the fluid channel (1a) in the fluid channel (1a), wherein the ring (16), when acted upon by the influencing variable, changes shape in such a way that the diameter of the annular hole is reduced.

12. Sewer cleaning system according to any of the preceding claims, wherein the shape memory element (20) comprises a shape memory material having a two-way memory effect.

## Revendications

1. Système de nettoyage de conduits, présentant au moins une tête de rinçage, dans lequel la tête de rinçage présente au moins une buse (1) et au moins un dispositif de commande permettant de commander l'au moins une buse (1), la buse présentant un boîtier de buse dans lequel un canal de fluide (1a) est formé, à travers lequel s'écoule un fluide amené à la buse sous pression, en particulier de l'eau,
**caractérisé en ce qu'**au moins un élément à mémoire de forme (20) est attribué à la buse, permettant de régler un état de fonctionnement (ouvert/fermé) du canal de fluide, une section transversale de l'ouverture de sortie de fluide du canal de fluide et/ou un angle de sortie du fluide sortant de la buse.

2. Système de nettoyage de conduits selon la revendication 1, dans lequel
- la buse est attribuée à un moyen de commande (3 ; 4 ; 5 ; 6 ; 8 ; 9 ; 16 ; 40) permettant de régler l'état de fonctionnement, la section transversale et/ou l'angle de sortie, et
- le moyen de commande est couplé à un moyen de réglage pour déplacer le moyen de commande par rapport au boîtier de buse,
les moyens de réglage étant au moins partiellement formés par l'au moins un élément à mémoire de forme (20), l'élément à mémoire de forme (20) changeant de forme en fonction d'au moins une grandeur d'influence, le changement de forme de l'élément à mémoire de forme (20) provoquant le déplacement du moyen de commande par rapport au boîtier de buse.

3. Système de nettoyage de conduits selon la revendication 2, dans lequel l'élément à mémoire de forme (20) est un élément à mémoire de forme allongé qui change de longueur en fonction de la grandeur d'influence et applique une force de réglage au moyen de commande sur la base du changement de longueur.

4. Système de nettoyage de conduits selon l'une des revendications 2 à 3, dans lequel les moyens de réglage présentent en outre au moins un élément de traction (21) qui est relié, d'une part, à l'élément à mémoire de forme (20) et, d'autre part, au moyen de commande.

5. Système de nettoyage de conduits selon l'une des revendications 2 à 4, dans lequel la grandeur d'influence est la température de l'élément à mémoire de forme (20) et dans lequel la température requise pour un déplacement prédéterminé du moyen de commande par rapport au boîtier de buse peut être appliquée directement ou indirectement à l'élément à mémoire de forme (20), l'élément à mémoire de forme (20) étant accouplé à un dispositif de commande et/ou de régulation (30) qui est adapté pour appliquer la température nécessaire à un déplacement prédéterminé du moyen de commande par rapport au boîtier de buse à l'élément à mémoire de forme (20).

6. Système de nettoyage de conduits selon la revendication précédente, dans lequel le dispositif de commande et/ou de régulation (30) est adapté pour alimenter en courant électrique l'élément à mémoire de forme (20) ou pour le conduire à travers l'élément à mémoire de forme (20) afin de le chauffer.

7. Système de nettoyage de conduits selon l'une des revendications 2 à 6, dans lequel ledit système de nettoyage de conduits présente au moins un moyen de rappel (13) coopérant avec le moyen de commande, une force de rappel du moyen de rappel (13) agissant contre la force de réglage du moyens de réglage, le moyen de rappel (13) comprenant de préférence au moins un élément de ressort.

8. Système de nettoyage de conduits selon l'une des revendications 2 à 7, dans lequel le moyen de commande comprend un boulon cylindrique (3) qui est disposé au moins partiellement dans le canal de fluide (1a) et transversalement au canal de fluide (1a) et peut tourner autour de son axe longitudinal et présente un diamètre plus grand que le diamètre du canal de fluide, le boulon présentant un canal (3a) s'étendant transversalement à travers le boulon, le boulon (3) pouvant être pivoté, à l'aide du moyen de réglage, entre une première position dans laquelle le canal (3a) du boulon libère au moins partiellement le canal de fluide (1a) de la buse (1) pour un écoulement du fluide à travers le canal de fluide, et une seconde position dans laquelle le boulon bloque le canal de fluide de la buse pour un écoulement du fluide à travers le canal de fluide.

9. Système de nettoyage de conduits selon la revendication précédente, dans lequel le boulon (3) est disposé par rapport au canal de fluide (1a) de la buse (1) de telle manière que le canal (3a) du boulon forme un canal de sortie d'eau de la buse, une rotation du boulon provoquant un changement de l'angle de sortie du fluide sortant de la buse et/ou le canal (3a) du boulon (3) présentant un diamètre plus grand côté entrée de fluide que côté sortie de fluide, de préférence un diamètre plus grand que l'extrémité du canal de fluide (1a) de la buse (1) faisant face au boulon.

10. Système de nettoyage de conduits selon l'une des revendications 2 à 7, dans lequel
- le moyen de commande comprend un pêne (5) qui est disposé transversalement au canal de fluide (1a) de la buse (1) et peut être déplacé, à l'aide du moyen de réglage, dans la direction radiale par rapport au canal de fluide (1a), le pêne pouvant être déplacé d'une première position dans laquelle le boulon bloque le canal de fluide de la buse pour un écoulement du fluide à travers le canal de fluide, à une seconde position dans laquelle le boulon libère au moins partiellement le canal de fluide de la buse pour un écoulement du fluide à travers le canal de fluide, et/ou
- le moyen de commande comprend un diaphragme perforé (6) comportant un premier trou (3a), lequel diaphragme perforé est disposé de manière rotative sur la buse (1) côté sortie de canal de fluide, le premier trou (3a), dans une première position de rotation du diaphragme perforé par rapport à la buse, correspondant à une ouverture de sortie de fluide du canal de fluide (1a) de la buse (1) et libérant la sortie de fluide hors du canal de fluide à travers le premier trou, et le diaphragme perforé, dans une autre position de rotation du diaphragme perforé par rapport à la buse (1), empêchant une sortie de fluide hors du canal de fluide, et/ou
- le moyen de commande comprend un diaphragme (8), en particulier un diaphragme à iris, comportant plusieurs lamelles (8a) pouvant être déplacées les unes par rapport aux autres et transversalement au canal de fluide (1a), lequel diaphragme est disposé sur la buse (1) côté sortie de canal de fluide, au moins une des lamelles (8a) étant accouplée au moyen de réglage et étant déplaçable à l'aide du moyen de réglage, un déplacement des lamelles provoquant un agrandissement ou une réduction de la section transversale de l'ouverture de sortie de fluide de la buse, et/ou
- le moyen de commande comprend un coulisseau (4) qui peut être déplacé, à l'aide du moyen de réglage, d'avant en arrière transversalement à l'axe longitudinal (LA) de la buse (1) dans la direction radiale entre une première position de coulisseau et une deuxième position de coulisseau, au moins un premier canal de fluide et un second canal de fluide étant formés dans le boîtier de buse, le coulisseau, dans la première position de coulisseau, empêchant la sortie de fluide hors du premier canal de fluide et le coulisseau, dans la deuxième position de coulisseau, empêchant une sortie de fluide hors du second canal de fluide, le coulisseau pouvant être déplacé de préférence, à l'aide du moyen de réglage, dans une troisième position de coulisseau qui se situe entre la première position de coulisseau et la deuxième position de coulisseau, et le coulisseau, dans la troisième position de coulisseau, empêchant une sortie de fluide hors des deux canaux de fluide ou libérant la sortie de fluide hors des deux canaux de fluide, et/ou
- le boîtier de buse présente une bague de buse (7) dans laquelle est formé le canal de fluide (1a), la bague de buse (7) étant montée rotative sur la tête de rinçage et le moyen de commande comprenant au moins un segment de frein (9) qui peut être déplacé à l'aide du moyen de réglage et peut être pressé contre une partie de paroi interne de la bague de buse afin de bloquer une rotation de la bague de buse, et/ou
- le boîtier de buse présente une bague de buse (7) dans laquelle est formé le canal de fluide (1a), la bague de buse étant montée rotative sur la tête de rinçage et le moyen de commande comprenant un pêne (5) pouvant être déplacé vers l'extérieur et vers l'intérieur par rapport à la buse dans la direction radiale à l'aide du moyens de réglage, la bague de buse présentant un évidement (5c) dans lequel le pêne (5) peut être amené en prise afin de bloquer une rotation de la bague de buse, et/ou
- le moyen de commande comprennent un tuyau de rinçage (40) dans lequel est formé un canal d'eau et à l'extrémité avant duquel est disposée au moins une buse ou une tête de rinçage, le tuyau de rinçage (40), en particulier la paroi du tuyau de rinçage, présentant, au moins sur certaines parties, l'élément à mémoire de forme, un raccourcissement de l'élément à mémoire de forme (20) provoquant un pliage du tuyau de rinçage (40).

11. Système de nettoyage de conduits selon l'une des revendications 2 à 7, dans lequel l'élément à mémoire de forme (20) est réalisé en tant que bague (19) qui est disposée dans le canal de fluide (1a) de manière coaxiale par rapport au canal de fluide (1a), la bague (16) changeant de forme lorsque la grandeur d'influence est appliquée de telle manière que le diamètre du trou de bague est réduit.

12. Système de nettoyage de conduits selon l'une des revendications précédentes, dans lequel l'élément à mémoire de forme (20) présente un matériau à mémoire de forme comportant un effet mémoire bidirectionnel.
